Europäisches Patentamt

European Patent Office

Office européen des brevets

(19)

(11) Veröffentlichungsnummer : **0 236 551**
**B1**

(12) **EUROPÄISCHE PATENTSCHRIFT**

(45) Veröffentlichungstag der Patentschrift :
24.01.90

(21) Anmeldenummer : 86115187.6

(22) Anmeldetag : 03.11.86

(51) Int. Cl.⁵ : **B 04 B 9/12, F 16 D 1/08**

(54) Zentrifuge.

(30) Priorität : 07.03.86 DE 3607505

(43) Veröffentlichungstag der Anmeldung :
16.09.87 Patentblatt 87/38

(45) Bekanntmachung des Hinweises auf die Patenterteilung : 24.01.90 Patentblatt 90/04

(84) Benannte Vertragsstaaten :
DE FR GB SE

(56) Entgegenhaltungen :
DE--A-- 2 501 513
FR--A-- 2 462 612
GB--A-- 613 985
US--A-- 4 615 640

(73) Patentinhaber : Heraeus Sepatech GmbH
Am Kalkberg Postfach 1220
D-3360 Osterode am Harz (DE)

(72) Erfinder : Müller, Dieter
Am Johannisborn 4
D-3363 Badenhausen (DE)
Erfinder : Pantucek, Peter, Dr.
Dieburger Strasse 10
D-6100 Darmstadt (DE)

(74) Vertreter : Heinen, Gerhard, Dr.
W.C. Heraeus GmbH Zentralbereich Patente und
Lizenzen Heraeusstrasse 12-14
D-6450 Hanau (DE)

Jouve, 18, rue St-Denis, 75001 Paris, France

**Beschreibung**

Die Erfindung betrifft eine Zentrifuge mit einem auf eine von einem Antriebsmotor angetriebene Welle aufgesetzten Arbeitskopf, bei der zwischen der Welle und einer zentralen Bohrung des Arbeitskopfes eine längsgeschlitzte Zwischenhülse angeordnet ist, die durch ein konisches Spreizteil über ein an dem Ende der Antriebswelle verschraubtes Gewindeelement gegen die Bohrung verspannt ist.

Eine derartige Zentrifuge ist aus der DE-OS 25 01 513 bekannt. Bei dieser Zentrifuge ist ein die Antriebswelle verlängerndes, hülsenförmiges Element aufgesetzt, auf das der Arbeitskopf aufgesetzt ist. Der obere Teil dieser Zwischenhülse ist geschlitzt ausgebildet und wird durch einen Spreizkegel über eine axial auf die Antriebswelle aufgeschraubte Schraube gegen die Zentralbohrung des Arbeitskopfes verspannt. Eine kraftschlüssige Verbindung kommt nur zwischen der gespreizten Zwischenhülse und dem Arbeitskopf im unteren Bereich der zentralen Bohrung zustande, während der Arbeitskopf im oberen Bereich der Bohrung nicht gezielt verspannt wird.

Der Erfindung liegt die Aufgabe zugrunde, eine auch nach längerem Einsatz und häufigen Lastwechseln sichere, feste, spielfreie Befestigung zwischen dem Arbeitskopf und der Antriebswelle einer Zentrifuge zu schaffen die andererseits eine leichte Lösbarkeit gewährleistet.

Diese Aufgabe wird dadurch gelöst, daß die Welle ein konisches Ende aufweist und auf dieses Ende, das sich in die zentrale Bohrung des Arbeitskopfes hinein erstreckt, das Spreizteil, das als Hülse mit konischer Bohrung ausgebildet ist, aufsitzt, und daß das Gewindeelement an seinem Außenumfang Vorsprünge aufweist, die in Ausnehmungen des hülsenförmigen Spreizteiles eingreifen. Das hülsenförmige Spreizteil, das infolge der konischen Bohrung einen keilförmigen Querschnitt aufweist, stellt zwischen dem oberen Bereich der Zwischenhülse und dem oberen Bereich der zentralen Bohrung eine kraftschlüssige Verbindung her. Durch die konische Ausbildung der Welle des Arbeitsmotors im Bereich der zentralen Bohrung wird die Zwischenhülse, die durch Schlitze radial spreizbar ist, an ihrem dem Antriebsmotor zugewandten Ende gegen die Bohrung des Arbeitskopfes verspannt. Mit dieser Anordnung wird eine kraftschlüssige Verbindung zwischen Motorwelle bzw. Zwischenhülse und Arbeitskopf sowohl im oberen als auch im unteren Bereich der zentralen Bohrung erzielt. Durch das in das Spreizteil mittels der an seinem Außenumfang angeordneten Vorsprünge eingreifende Gewindeelement wird einerseits beim Anziehen des Gewindeelementes das Spreizteil zwischen Motorwelle und Hülse gedrückt, während andererseits durch diese Vorsprünge beim Lösen der Verbindung das Spreizteil aus dem Spalt zwischen dem konischen Ende der Motorwelle und der Zwischenhülse herausgezogen wird. Durch das kraftschlüssige Verspannen des Arbeitskopfes im Bereich des oberen und unteren Endes der zentralen Bohrung mit der Motorwelle wird eine spielfreie Halterung des Arbeitskopfes, auch nach längeren Lastwechselzahlen, erzielt.

In einer vorteilhaften Ausgestaltung sind die Vorsprünge des Gewindeelementes durch einen umlaufenden Flansch gebildet, der in eine radiale Nut in der konischen Bohrung der Hülse eingreift. Durch diese Maßnahme ist in jeder Stellung des Gewindeelementes dessen umlaufender Flansch in Eingriff mit der radialen Nut des hülsenförmigen Spreizteils.

Eine sichere Auflage des Arbeitskopfes auf der Motorwelle bzw. der Zwischenhülse wird durch einen Flansch an dem dem Antriebsmotor zugewandten Ende der Zwischenhülse gewährleistet. Mit einer Anpassung der Innenseite der Zwischenhülse an ihrem dem Antriebsmotor zugewandten Ende wird ein guter Paßsitz zwischen Welle und Hülse erreicht. Um beim Anziehen bzw. Lösen der Verbindung ein Verdrehen zwischen dem Spreizteil und der Zwischenhülse zu verhindern, kann hierzu ein Sicherungselement vorgesehen werden, das in einer vorteilhaften Ausgestaltung, ein sich radial von der Zwischenhülse in eine axiale Nut des Spreizteiles erstreckender Mitnehmerzapfen ist. In der Nut kann sich das Spreizteil in axialer Richtung beim Verspannen und beim Lösen verschieben.

Von Vorteil ist ein radial nach innen gerichteter Kragen am oberen Ende der Zwischenhülse. Dieser Kragen bildet eine Anlagefläche für das Spreizteil, das sich beim Lösen der Anordnung hieran mit seiner Stirnfläche anlegt und über das Gewindeelement, falls erforderlich, den Arbeitskopf völlig vom Eingriff mit der Motorwelle löst. Anstelle des Kragens kann auch ein über die Außenfläche des Spreizteiles vorstehender Ring (z. B. Seeger-Ring) eingesetzt werden.

Um eine gute Dehnung des Spreizteiles beim Verspannen zwischen der Zwischenhülse und der Motorwelle zu gewährleisten, ist es von Vorteil, wenn das Spreizteil an seinem keilförmigen Ende mit mindestens einem axialen Dehnungsschlitz versehen ist oder aber das Spreizteil zweiteilig in Form von halbschalenförmigen Teilen ausgebildet ist.

Ein Ausführungsbeispiel der Erfindung wird nachfolgend anhand der Zeichnung näher erläutert. In der Zeichnung zeigt :

Figur 1 einen Arbeitskopf im Bereich seiner zentralen Bohrung mit im Schnitt dargestellter Wellen-Befestigung,

Figur 2 einen Schnitt entlang der Schnittlinie II-II in Figur 1 und

Figur 3 eine Ansicht der in Figur 1 gezeigten Zwischenhülse.

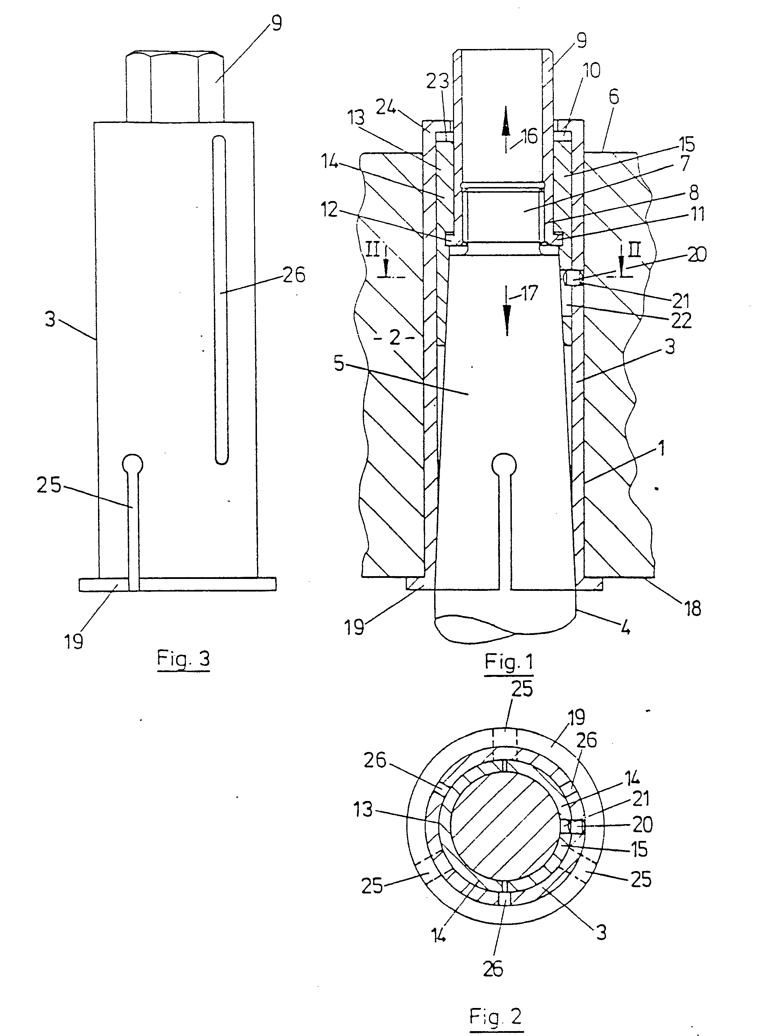

Wie aus Figur 1 ersichtlich ist, ist in einer zentralen Bohrung 1 eines Arbeitskopfes 2 eine Zwischenhülse 3 eingesetzt, die ihrerseits auf das Ende der Welle 4 des Antriebsmotors aufgesetzt ist. Das sich in die zentrale Bohrung 1 bzw. die Zwischenhülse 3 erstreckende Ende 5 der Welle 4 ist in Richtung der Oberseite 6 des Arbeitskopfes 2 konisch verlaufend ausgebildet. An der Stirnseite der Welle 4 ist ein Fortsatz 7 mit Außengewinde 8 angesetzt, auf dem ein Gewindeelement 9 aufgeschraubt ist. Bei diesem Gewindeelement 9 handelt es sich um ein hülsenförmiges Teil, das sich in diesem Ausführungsbeispiel mit seinem freien Ende durch eine Öffnung der Zwischenhülse 3 hindurch erstreckt. Der Außendurchmesser des Gewindeelementes 9 ist etwa um ein Drittel geringer als der Innendurchmesser der Zwischenhülse 3, so daß zwischen der Zwischenhülse 3 und dem Gewindeelement 9 ein radialer Zwischenraum 10 verbleibt. An dem unteren, der Stirnseite der Welle 4 zugewandten Ende des Gewindeelementes 9 sind radial nach außen verlaufende Vorsprünge 11 angesetzt, die in Ausnehmungen 12 eines konischen Spreizteiles 13 eingreifen. Bei dem Spreizteil 13 handelt es sich um eine aus zwei halbschalenförmigen Teilen 14 und 15 zusammengesetzte Hülse, wie dies aus Figur 2 hervorgeht, die als Keile zwischen dem konischen Ende 5 der Welle 4 und der Zwischenhülse 3 sitzen. Durch Verdrehen des Gewindeelementes 9 an dem Fortsatz 7 wird das Spreizteil 13 mit seinen halbschalenförmigen Teilen 14 und 15 in radialer Richtung verschoben, und zwar beim Lösen des Gewindeelementes 9 in Richtung des Pfeiles 16 und beim Anziehen des Gewindeelementes in Richtung des Pfeiles 17. Am unteren, in Richtung der Unterseite 18 des Arbeitskopfes 2 weisenden Ende der Zwischenhülse 3 ist ein quer nach außen gerichteter umlaufender Flansch 19 ausgebildet, auf dem der Arbeitskopf aufliegt. Im Bereich dieses unteren, dem Antriebsmotor zugeordneten Ende der Zwischenhülse ist deren Innenseite abgeschrägt und so dem Konus der Welle 4 angepaßt.

Zur Befestigung des Arbeitskopfes an der Welle 4 des Antriebsmotors werden zunächst die beiden halbschalenförmigen Teile 14, 15 des Spreizteiles 13 mit dem Gewindeelement 9, das mit seinem umlaufenden Vorsprung 11 in entsprechende Ausnehmungen 12 der Spreizteile eingreift, von der Unterseite 18 des Arbeitskopfes 2 in die zentrale Bohrung 1 eingeführt. Eines der Spreizteile 14, 15 ist mittels einer Stellschraube oder Stift 20, die mit einer Bohrung 21 der Zwischenhülse 3 verschraubt ist und in einen axialen Schlitz des einen halbschalenförmigen Teiles 14, 15 eingreift, gesichert. Die Zwischenhülse 3 wird zusammen mit den halbschalenförmigen Teilen 14, 15 und dem Gewindeelement 9 von der Unterseite 18 des Arbeitskopfes in die zentrale Bohrung 1 eingesetzt. Anschließend wird der Arbeitskopf 2 mit der Zwischenhülse 3 auf das Ende 5 der Welle 4 aufgesetzt. Durch den Konus der Welle 4 wird die Zwischenhülse 3 auseinandergedrückt, so daß ein Kraftschluß zwischen der Welle, dem unteren Bereich der Zwischenhülse 3 und dem Arbeitskopf 2 entsteht. Durch Anziehen des Gewindeelementes 9 in Richtung des Pfeiles 17 werden die halbschalenförmigen Teile 14, 15 nach unten in den keilförmigen Zwischenraum 10 zwischen dem Ende der Motorwelle und der Innenseite der Zwischenhülse 3 verschoben, wodurch eine Verspannung der Zwischenhülse im oberen Bereich der zentralen Bohrung 1 erreicht wird. Die in das eine halbschalenförmige Teil 14, 15 eingreifende Stellschraube hat hierbei die Funktion, ein Mitdrehen der beiden halbschalenförmigen Teile 14, 15 beim Anziehen des Gewindeelementes 9 zu verhindern. Der Schlitz 22 ermöglicht ein axiales Verschieben der halbschalenförmigen Teile 14, 15. Beim Lösen der Verbindung über das Gewindeelement 9 werden die beiden halbschalenförmigen Teile 14, 15 in Richtung des Pfeiles 16 über die in die Ausnehmung 12 eingreifenden Vorsprünge 11 verschoben. Falls der Arbeitskopf bzw. die Zwischenhülse 3 am unteren Teil der Welle 4 verklemmt sein sollte und ein Lösen nicht möglich ist, werden die halbschalenförmigen Teile 14, 15 über das Gewindeelement 9 so weit in Richtung des Pfeiles 16 verschoben, bis sie mit ihrer oberen Stirnseite 23 an einem nach innen gerichteten Kragen 24 am oberen Ende der Zwischenhülse 3 zur Anlage kommen und nach weiterem Verdrehen des Gewindeelementes 9 der Motorwellenkonus aus dem unteren Bereich der Zwischenhülse 3 herausgeschoben wird. Nach Entspannen der Verbindung im unteren Bereich der Zwischenhülse bzw. der zentralen Bohrung 1 kann der Arbeitskopf abgenommen werden. In der Zwischenhülse 3 sind drei um 60° gegeneinander versetzte untere Schlitze 25, und zwar im unteren Drittel der Zwischenhülse 3, ausgeführt, zusätzlich im oberen Bereich der Zwischenhülse 3 drei weitere Schlitze 26 vorgesehen, die um 60° gegenüber den unteren Schlitzen 25 versetzt sind und etwa vom Ende der unteren Schlitze 25 an beginnend verlaufen. Durch diese Schlitze kann die Zwischenhülse 3 sowohl im unteren als auch im oberen Bereich ausreichend gespreizt werden.

## Patentansprüche

1. Zentrifuge mit einem auf eine von einem Antriebsmotor angetriebene Antriebs-welle (4) auf gesetzten Arbeitskopf (2), bei der zwischen der Welle (4) und einer zentralen Bohrung (1) des Arbeitskopfes (2) eine längsgeschlitzte Zwischenhülse (3) angeordnet ist, die durch ein konisches Spreizteil (13) über ein an dem Ende der welle (4) verschraubtes Gewindeelement (9) gegen die Bohrung verspannt ist, dadurch gekennzeichnet, daß die Welle (4) ein konisches Ende (5) aufweist und auf dieses Ende (5), das sich in die zentrale Bohrung (1) des Arbeitskopfes (2) hinein erstreckt, das Spreizteil (13), das als Hülse mit konischer Bohrung ausgebildet ist, aufsitzt, und daß das Gewindeelement (9) an seinem Außenumfang Vorsprünge (11) aufweist, die in Ausnehmungen (12) des hülsenförmigen Spreizteiles (13) eingreifen.

2. Zentrifuge nach Anspruch 2, dadurch gekennzeichnet, daß die Vorsprünge (11) des Gewindeelements (9) durch einen umlaufenden Flansch gebildet sind, die in eine radiale Nut des Spreizteiles (13) eingreifen.

3. Zentrifuge nach Anspruch 1 oder 2, dadurch gekennzeichnet, daß die Zwischenhülse (3) an ihrem dem Antriebsmotor zugewandten Ende einen Flansch (19) besitzt, auf dem der Arbeitskopf (2) aufliegt und im Bereich dieses Endes auf ihrer Innenseite dem Konus der welle (4) angepaßt ist.

4. Zentrifuge nach einem der Ansprüche 1 bis 3, dadurch gekennzeichnet, daß das Spreizteil (13) und die Zwischenhülse (3) über ein Sicherungselement gegen gegenseitige Verdrehung gesichert sind.

5. Zentrifuge nach Anspruch 4, dadurch gekennzeichnet, daß das Sicherungselement ein sich radial erstreckender Mitnehmerzapfen (20) ist, der in einen axialen Schlitz (22) des Spreizteiles (13) eingreift.

6. Zentrifuge nach einem der Ansprüche 1 bis 5, dadurch gekennzeichnet, daß die Zwischenhülse (3) an ihrem oberen Ende einen radial nach innen gerichteten Kragen (24) aufweist.

7. Zentrifuge nach nach einem der Ansprüche 1 bis 6, dadurch gekennzeichnet, daß das Spreizteil (13) an seinem keilförmigen Ende mindestens einen axialen Dehnungsschlitz aufweist.

8. Zentrifuge nach einem der Ansprüche 1 bis 7, dadurch gekennzeichnet, daß das Spreizteil aus halbschalenförmigen Teilen (14, 15) besteht.

## Claims

1. A centrifuge comprising an operating head (2) mounted on a drive shaft (4) driven by a driving motor, in which between the shaft (4) and a central bore (1) of the operating head (2) is provided a longitudinally slotted intermediate sleeve (3) which is braced against the bore by a conical spreader element (13) via a screw-threaded element (9) screwed onto the end of the shaft (4), characterized in that the shaft (4) has a conical end (5) and on this end (5), which extends into the central bore (1) of the operating head (2), is seated the spreader element (13) which is formed as a sleeve with a conical bore, and that the screw threaded element (9) is provided on its outer periphery with projections (11) which engage in recesses (12) of the sleeve-shaped spreader element (13).

2. A centrifuge according to claim 2, characterized in that the projections (11) of the screw-threaded element (9) are formed by an encircling flange and engage in a radial groove of the spreader element (13).

3. A centrifuge according to claim 1 or 2, characterized in that the intermediate sleeve (3) is provided at its end facing towards the driving motor with a flange (19) on which the working head (2) bears and on its inner side matches the taper of the spindle (4) in the region of this end.

4. A centrifuge according to one of claims 1 to 3, characterized in that the spreader element (13) and the intermediate sleeve (3) are secured against mutual rotational displacement by means of a safety element.

5. A centrifuge according to claim 4, characterized in that the safety element is a radially extending entraining pin (20) which engages in an axial slot (22) of the spreader element (13).

6. A centrifuge according to one of claims 1 to 5, characterized in that the intermediate sleeve (3) has a radially inwardly directed collar (24) at its upper end.

7. A centrifuge according to one of claims 1 to 6, characterized in that the spreader element (13) has at least one axial expansion slot at its tapering end.

8. A centrifuge according to one of claims 1 to 7, characterized in that the spreader element comprises half-shell-shaped components (14, 15).

## Revendications

1. Centrifugeuse comportant une tête de travail (2) posée sur un arbre d'entraînement (4) entraîné par un moteur d'entraînement, dans le cas de laquelle, entre l'arbre (4) et un alésage central (1) de la tête de travail (2) est disposée une douille intermédiaire, fendue longitudinalement, qui est bridée contre l'alésage par une pièce expansible conique (13), par l'intermédiaire d'un élément taraudé (9) vissé sur l'extrémité de l'arbre (4), caractérisée en ce que l'arbre (4) présente une extrémité conique (5) et que sur cette extrémité (5), qui s'étend intérieurement dans l'alésage central (1) de la tête de travail (2), repose la pièce expansible (13) qui a la forme d'une douille à alésage conique ; et en ce que l'élément taraudé (9) présente à sa périphérie extérieure des saillies (11) qui viennent en prise dans des évidements (12) de la pièce expansible (13) en forme de douille.

2. Centrifugeuse selon la revendication 1, caractérisée en ce que les saillies (11) de l'élément taraudé (9) sont formées par un rebord périphérique qui vient en prise dans une rainure radiale de la pièce expansible (13).

3. Centrifugeuse selon la revendication 1 ou 2, caractérisée en ce que la douille intermédiaire présente, à son extrémité côté moteur d'entraînement, un rebord (19) sur lequel repose la tête de travail (2) et que, dans la zone de cette extrémité, elle adaptée, en ce qui concerne sa face intérieure, au cône de l'arbre (4).

4. Centrifugeuse selon l'une des revendications 1 à 3, caractérisée en ce que la pièce expansible (13) et la douille intermédiaire (3) sont verrouillées à l'égard d'une rotation relative au moyen d'un élément de verrouillage.

5. Centrifugeuse selon la revendication 4, caractérisée en ce que l'élément de verrouillage est un tenon entraîneur (20) qui s'étend radialement et vient en prise dans une fente axiale (22) de la pièce expansible (13).

6. Centrifugeuse selon l'une des revendications 1 à 5, caractérisée en ce que la douille intermédiaire (3) présente, à son extrémité supérieure, un collet (24) dirigé radialement vers l'intérieur.

7. Centrifugeuse selon l'une des revendications 1 à 6, caractérisée en ce que la pièce expansible (13) présente, à son extrémité en forme de coin, au moins une fente d'expansion axiale.

8. Centrifugeuse selon l'une des revendications 1 à 7, caractérisée en ce que la pièce expansible est constituée de deux pièces en forme de demi-coquilles (14, 15).

Fig. 3

Fig. 1

Fig. 2